# EUROPEAN PATENT SPECIFICATION

(11) **EP 3 664 920 B1**
(45) Date of publication and mention of the grant of the patent: **09.03.2022**
(21) Application number: 18755159.3
(22) Date of filing: 03.08.2018
(51) Int. Cl.: B01D 65/02

(54) **METHOD AND DEVICE FOR CLEANING A CERAMIC MEMBRANE USING OZONE GAS**
VERFAHREN UND VORRICHTUNG ZUR REINIGUNG EINER KERAMISCHEN MEMBRAN UNTER VERWENDUNG VON OZONGAS
PROCÉDÉ ET DISPOSITIF DE NETTOYAGE D'UNE MEMBRANE CÉRAMIQUE À L'AIDE DE GAZ D'OZONE

(30) Priority: 09.08.2017 EP 17185606
(43) Date of publication of application: 17.06.2020
(73) Proprietor: Bio-Aqua A/S, 3600 Frederikssund (DK)
(72) Inventor: JÜRGENSEN, Erik Jessen, 4243 Rude (DK); SVENDSEN, Tore Christian, 4040 Jyllinge (DK)
(74) Representative: Holme Patent A/S
(86) International application number: PCT/EP2018/071170
(87) International publication number: WO 2019/030144

(56) References cited:
- EP-A1- 2 070 585
- EP-B1- 0 216 876
- CA-A1- 2 377 202
- JP-A- 2000 167 363
- JP-A- 2006 281 163
- KIM ET AL: "Effect of fouling reduction by ozone backwashing in a microfiltration system with advanced new membrane material", DESALINAT, ELSEVIER, AMSTERDAM, NL, vol. 202, no. 1-3, 1 December 2006 (2006-12-01), pages 361-368, XP005787361, ISSN: 0011-9164, DOI: 10.1016/J.DESAL.2005.12.075

## Description

The present invention relates to a method of restoring functional capacity of least one ceramic membrane for filtering or separating a flow of liquid particle mixture, wherein the at least one ceramic filtering membrane is situated in a membrane housing having at least a feed inlet and a permeate outlet for produced permeate, and wherein the flow of liquid particle mixture is provided in a filtering direction of the at least one ceramic membrane, and after a filtering period draining the membrane housing at least partly of liquid particle mixture via an emptying outlet prior to injection of the ozone gas or when the ozone gas is injected.

Membranes are used for liquid particle separation like filtering wastewater. Accumulation of fouling such as organic compounds on and in the ceramic membrane during separation or filtering causes the flow through the ceramic membrane to decrease and eventually the ceramic membrane has to be cleaned. The cleaning can be done by forcing the filtered water - the permeate - back through the ceramic membrane, but often chemical cleaning is also necessary.

To remove foulings, chemicals like basic solutions (high pH value) are used. This cleaning process takes long time and produces a lot of chemical mixed water that needs to be transported to a cleaning facility causing a lot of work. The transport and treating of chemicals are not environmentally friendly, must be done under special safety requirements, and is expensive.

Furthermore the complete cleaning cycle including rinses between stages may take as long as 2 hours to complete. *(*Wallberg, Ola; Jönsson, Ann-Sofi; Wickström, Peter; "Membrane cleaning - a case study in a sulphite pulp mill bleach plant"; Desalination 141 (2001) 259-268*).*

European patent application no. EP 2070585A1 proposes a method of operating a membrane separator. This known membrane separator is a membrane module in form of a bundle of hollow fiber membranes composed of a large number of filter membranes that are fixed together by adhesion, one or both of the ends of a membrane being open, and which is operated in the dead end mode. Hollow membranes are not ceramic.

The method repeats the filtering steps and the physical washing step twice or more. Matter peeled off by the physical washing is discharged out of the system together with a quantity of untreated water. To enhance the washing effect of the physical washing step, it is suggested to dissolve an oxidizer, such as sodium hypochlorite or ozone, in the backwash medium.

The technology of EP 2070585A1 solves the problem of reducing loss in differential pressure during filtering across the hollow membrane due to clogging by adjusting height of untreated medium to be filtered in the hollow membrane housing thereby mechanically rinsing the hollow membrane using the untreated water itself. To further clean the filter membrane physically acting backwashing and chemically acting ozone bubbles are used. Thus ozone bubbles rise along the vertically arranged submerged hollow membrane module to clean the membrane module chemically at the filtering side, thus along the exterior face of the hollow membrane. EP 2070585A1 is silent about the pressure and concentration of ozone gas required in the air washing step but the ozone bubbles are in liquid suspension, which imply low ozone pressures. Also ozone is indicated to be a powerful oxidizer, indicating safety and health considerations and to use low ozone gas concentrations. The technology of EP 2070585A1 cannot be used for other orientations of the filter membrane than vertical.

Japanese patent application no. 2000167363 proposes to ventilate a filtering membrane with ozone gas in the filtering direction or in the reverse direction before starting backwashing of the filtering membrane. Japanese patent application no. 2000167363 has no teaching of the kind of membrane and has no mentioning of ceramic membranes. The sole suggestion of operational parameters for the ozone treatment step is that the ozone gas is blown in the filtering direction for 1 minute at a low concentration of 20 g ozone gas/m³. The ozone gas having passed through the membrane is decomposed in an exhaust ozone treatment tower to make spend exhaust ozone not harmful. No operational parameters are suggested or hinted to for ventilating ozone gas in the direction reverse to the filtering direction, e.g. no ozone injection pressure is mentioned.

Japanese patent application no. 2000167363 does however realize differences in inactivation rate of pathogenic microorganisms when using the different aeration directions of the ozone gas. When ventilation was performed in the direction opposite to the filtration direction, the microorganisms on the membrane surface were mechanically peeled off the membrane by the flow of ozone gas and were covered with other pollutants. In the case of aeration in the filtration direction, the microorganisms were touched much better by the ozone gas due to being held on the membrane surface during the ozone treatment. Thus the chemical effect of ozone on the microorganisms when ventilating ozone in the direction opposite to the filtration direction was little and the peeled off matter became little exposed to the ozone gas due to being covered with pollutant.

Japanese patent application no. 20006281163 relates to cleaning of a filter membrane by combination of a gas cleaning step A wherein a suspended matter is removed from the filter membrane by making an ozone-containing gas-cleaning medium to be injected to a water side of the filter membrane to contact with the whole filter membrane, and a gas cleaning step B wherein the suspended matter is removed from the filter membrane by making a liquid level to lower and discharging of the water to be treated in the membrane module, thus lowering the liquid level of the water to be treated around the filter membrane, and thereafter carrying out gas-cleaning while raising the liquid level of the water side to be treated upwards from the lower part of the filter membrane. The ozone-containing gas-cleaning medium is exhausted.

The article "Effect of fouling reduction by ozone backwashing in a microfiltration system with advanced new membrane material" by Jong-OhKimaJong-TaeJungaIck-TaeYeombGyung-HaeAoh in Desalination, Volume 202, Issues 1-3, 5 January 2007, Pages 361-368 investigates the effect of intermittent ozone backwashing in a submerged metal membrane microfiltration system using ozone at low concentration of 58 mg/L. Residual ozone is led to exhaust after treatment with 4% potassium iodide solution.

The above-mentioned methods all demonstrates disadvantages, such as insufficient freeing the filtering membrane of deposits, too low regeneration time, too high costs for ozone generation, high cost for treating harmful excess ozone, and still unsatisfactory lifetime of the devices.

These disadvantages are remedied by the present invention by in a first aspect of the invention providing a method of the kind mentioned in the opening paragraph that is very fast and efficient,

in a second aspect of the invention providing a method of the kind mentioned in the opening paragraph that produces a minimal amount of chemical waste,

in a third aspect of the invention providing a method of the kind mentioned in the opening paragraph that only uses a little amount of energy,

in a fourth aspect of the invention providing a method of the kind mentioned in the opening paragraph that can be used for efficiently cleaning multiple ceramic membranes in same membranes housing,

in a fifth aspect of the invention providing a method of the kind mentioned in the opening paragraph that can be used for cleaning both tubular and flat sheet ceramic membranes in any possible orientation, including horizontal and vertical,

in a sixth aspect of the invention providing a method of the kind mentioned in the opening paragraph that optimizes use of ozone gas,

in a seventh aspect of the invention providing a method of the kind mentioned in the opening paragraph that minimizes the overall use of ozone gas over the lifetime of a ceramic membrane,

in an eighth aspect of the invention providing a method of the kind mentioned in the opening paragraph that can be performed without backwashing the membrane,

in a ninth aspect of the invention providing a method of the kind mentioned in the opening paragraph that can be implemented in existing installations and plants that produce liquid particle mixtures, without major modification of said installations and plants in order to clean such product streams before discharge of filtered matter and collection of dissolved particulate matter,

in a tenth aspect of the invention providing a method of the kind mentioned in the opening paragraph that extend effective service life of the ceramic membrane(s),

in an eleventh aspect of the invention providing a liquid particle separation device that can be cleaned very fast and efficient,

in a twelfth aspect of the invention providing a liquid particle separation device adapted for reversible fouling,

in a thirteenth aspect of the invention providing a liquid particle separation device that provides the advantages mentioned for the method of the present invention, and

in a fourteenth aspect of the invention providing a liquid particle separation device having high chemical resistance.

Within the scope of the present invention, the term liquid particle mixture means, but is not limited to, liquid food within the agri-foodstuffs industry, wastewater, discharge water, effluent, exhaust water, sewage or sewage water from private homes, public sector, hospitals, factories, industry like but not limited to agri-foodstuffs industry, agricultural industry, chemical industry, pharmaceutical industry, mining industry, or manufacturing industry or combinations of those.

The novel and unique whereby these and other aspects are achieved according to the present invention consists in that the method comprises after a filtering period subjecting the at least one ceramic filtering membrane to a membrane regeneration step in a regeneration period in which a ozone gas, e.g. a jet of ozone gas, at a concentration of at least 120 gO₃/Nm³ where a normal cubic meter (Nm³) is defined as one cubic meter of gas at a temperature of 0°C, and a pressure of 1.01325 bar, is injected into the membrane housing via an ozone inlet and passed through the at least one ceramic membrane in an ozone injection direction, which is opposite the filtering direction, and re-circulating used ozone gas between an ozone outlet of the membrane housing and the ozone inlet of the membrane housing during the regeneration period.

Ceramic membranes typically have a porous inorganic membrane layer of silicon carbide, aluminium oxide, titanium oxide or zirconium oxide over a porous support. A tubular or flat sheet support is e.g. made by extrusion, and then multiple layers of the ceramic membrane material are applied.

The porous layer has pores ranging from 0.02 µm to 3.0 µm and choice of pore size depends on intended purpose of the ceramic membrane. For the tubular ceramic membrane the diameter of a tubular support may vary from 10-180 mm and the feed channels for the flow of liquid particle mixture range from one very wide feed channel in a ceramic membrane to many very narrow feed channels with inside diameters from 1.0-25 mm. The diameter of the feed channels has impact on the tubular membrane surface area and many narrow feed channels result in a much larger active surface area than a single large diameter feed channel. The multichannel monolithic form of the ceramic membrane offers the highest filtration packing density, and the narrower and smaller the feed channel are the higher packing density. But due to being so narrow the clogging tendency and clogging frequency are much increased compared to the single large feed channel embodiment of a tubular ceramic membrane member, resulting in a hitherto challenge in repetitive restoring of functional capacity of the tubular ceramic membrane(s), in particular when high efficiency and high yield and high purity of cleaned water are in demand.

Flat sheet membrane contains a number of membrane elements stacked at intervals. Each membrane element has flat sheet ceramic membranes attached on both side of a supporting panel.

All membrane elements are connected via a tube to a permeated water manifold. Fouling builds up directly on the flat sheet ceramic membranes and the high concentration ozone gas of 120 gO₃/Nm³ is injected in the ozone gas injection direction opposite the filtering direction. In filtering operation the flat sheet ceramic membrane is submersed in the liquid particle mixture in a liquid particle mixture tank. Thus for flat sheet membrane the liquid particle mixture tank constitutes the membrane housing.

Too high a concentration of particulates, fibers, proteins, fat and other items can quickly build-up and block the membrane pores or even erode the porous matrix. Thus it is essential to a ceramic membrane that amounts of deposits are kept low, and are dealt with fast and promptly to avoid downtime of ceramic membrane member thereby enabling sustained and uninterrupted use for long periods.

The appropriate feed channel diameter of a tubular ceramic membrane is selected and adapted to the viscosity of the flow of liquid particle mixture to be treated.

In accordance with the present invention a flow of liquid particle mixture runs from the feed inlet in a cross-flow arrangement mode, and exits the ceramic membrane as cleaned permeate at an outlet face while retentate leaves the other end of the channels. Optionally the liquid particle mixture is a pressurized liquid particle mixture. In cross-flow membrane filtration feed stream of liquid particle mixture flows parallel to the membrane filtration surface in order to maintain high velocity across the membrane surface, thereby reducing the built up on the membrane surface.

One of the major advantages of ceramic membranes are that they have a high resistance to chemicals, including high resistance to ozone. Ceramic membranes are thus highly chemically stable.

They are also thermally stable and tolerate high operating pressures. Thus all kinds of liquid can be separated without the need to e.g. lower temperature, which makes use of ceramic membranes highly attractive.

There has however hitherto existed a prejudice of using high concentration of ozone to clean ceramic membranes, on the one hand since the ceramic membranes typically has polymeric gaskets that deteriorate if subjected to ozone gas concentrations as high as above 120 gO₃/Nm³, on the other hand because administration of such high ozone concentrations involves a threat to health. In fact polymeric gaskets deteriorate already at much lower ozone gas concentrations. This is why ozone concentrations used in the prior art is as low as 20 gO₃/Nm³, or lower.

The advantages of treating organic fouling with ozone is however huge. Not only will ozone decompose organic matter, it will also help to remove minerals from the flow of liquid particle mixture.

And due to the high ozone concentration of the injected ozone the fouling material is not only decomposed fast but due to the pressure of the ozone gas the ozone gas also penetrates the ceramic membrane pores, thereby opening the fouling layer to decompose to enable higher flux. The inventors of the present invention has established that substantially no loss of ozone takes place across the ceramic membrane when injecting ozone gas at a concentration of at least 120 gO₃/Nm³ into the membrane housing in an ozone injection direction, which is opposite the filtering direction. The ozone concentration may continue to be substantially the same on both sides of the ceramic membrane, but a small loss of up to maximum 20wt% has been demonstrated when cleaning some particular dense and complex liquid particle mixtures. The rest of the ozone gas remains reactive in the membrane housing.

After the regeneration step the ceramic membrane(s) may perform even better than before. The reason for this surprisingly improved effect is not fully known at the time of filing the present application but is attributed to the theory that ozone stores and stays reactive in the pores of the ceramic membrane inside the closed and sealed membrane housing. So the method of the present invention provide the synergistic effect of both chemically acting on the liquid particle mixture, physically gas flushing the ceramic membrane, and improving the filtering properties of said organic membrane simply by using the high ozone gas concentration in the reverse direction of the filtering direction.

In preferred embodiments of the method of the present invention the concentration of ozone gas in the ceramic membrane regeneration step is at least 150 gO₃/Nm³, or at least 175 gO₃/Nm³, and preferably 200 gO₃/Nm³, thus at least 6 times up to at least 10 times more than used in prior art devices and method.

While the high ozone concentration is essential for the performance of the method and the regeneration of the functional capacity of the ceramic membrane the pressure of the ozone gas in the membrane regeneration step becomes less critical in the method of the present invention. The pressure of the injected ozone gas in the membrane regeneration step of the ceramic membrane is selected to be above the bubble point of the specific ceramic membrane, such as at least 1.5 bar, preferably at least 1.8 bar, more preferred at least 2.0 bar, and more preferred 2.2 bar. Otherwise the ozone cannot pass the ceramic membrane.

The method of the present invention is used to regenerate any ceramic membrane, including but not limited to tubular ceramic membranes or flat sheet ceramic membranes.

In case of tubular ceramic membranes ozone gas at the higher pressure levels may be optimum, such as a jet of ozone gas. Since a substantial amount of ozone gas that has been injected into the membrane housing remains reactive, thus being a residual ozone gas one membrane regeneration cycle, this residual ozone gas is advantageously re-circulated between an ozone outlet and the ozone inlet of the membrane housing. The method of the present invention may also comprise an ozone gas capturing step in which the ozone gas used in the regeneration period is captured and collected for reuse in a subsequent or same regeneration step.

Recycling ozone or use of captured ozone gas may however not be limited to the regeneration step and/or the regeneration period in that recycling used ozone gas between the ozone inlet of the membrane housing and the ozone outlet of the membrane housing can take place during any step and stage of the method at the claimed high concentrations or at lower concentrations as maintenance dosages, such as pulsed or continuous maintenance dosages to provide a chemical impact on the liquid particle mixture or its constituents, such as also prior to liquid particle mixture flowing through the ceramic membrane, thereby oxidizing matter in the liquid particle mixture prior to actual filtration.

It is also possible to deliver to the at least one ceramic membrane inside the membrane housing a mixture of recycled ozone gas and gas from an ozone gas source of fresh ozone gas, where the fresh ozone gas is just to top up the ozone gas concentration if needed so that it is at least 120 g/Nm³.

In an embodiment of the method of the present invention the membrane housing can be drained at least partly of liquid particle mixture via an emptying outlet prior to injection of the ozone gas whereby ozone gas subsequently can get in direct contact with both foulings and deposits on said ceramic membrane. The draining may be particularly advantageously in situations of heavy contamination and clogging of the pores of the ceramic membrane. When the membrane housing is drained prior to injection of the ozone gas, the ozone gas can flow directly towards and onto the surfaces of the ceramic membrane without first being dissolved in liquid matter inside the membrane housing or inside the ceramic membranes and pass through water. Thus the draining step provides fast and direct contact between the reactive ozone gas and the components to be removed from the ceramic membrane. Also the short travel path of the ozone gas can speed up the restoring process.

The emptying outlet can be situated at the bottom of the membrane housing when restoring functional capacity of the ceramic membrane. In that way the membrane housing can be totally or nearly totally emptied by draining the membrane housing by gravity. Optionally, a pump means, fan means or vacuum means can be used to speed up emptying of the membrane housing prior to injection of ozone gas crosswise the ceramic membrane.

Optionally, the ozone gas injection is used as the sole means to displace the liquid inside the membrane housing to empty said membrane housing. Such displacing of liquid can however also be done in combination with one or more of gravity, pump means, fan means and vacuum means.

Ceramic membranes, which are operated in cross (tangential) flow filtration mode, have the benefit of maintaining a high filtration rate compared to the direct-flow filtration mode of most conventional filters.

The emptying outlet can be the feed inlet so that the liquid particle mixture in the membrane housing can easily be filtered or separated by the membrane when the functional capacity of the membrane has been restored, and so that a minimum number of extra openings need to be made in existing membrane housing.

The emptying outlet can include an emptying valve situated on the feed inlet able to control the emptying. The emptying valve can be controlled electronically and from a remote location so that the method can be performed without the need for intervention by man, preferably without any intervention by man at all.

Using ozone gas instead of liquid chemicals like alkali solutions for cleaning the membrane has the advantage that there will be no contaminated water that has to be cleaned at the spot or transported to a cleaning facility. Ozone is an instable compound with a relatively short half-life and ozone will decay rapidly into harmless, useful, ordinary diatomic oxygen. The half-life of ozone in water is shorter than in air and the decomposition of ozone in water is influenced by factors such as temperature, pH, environment, and concentrations of dissolved matter and UV light. In general, it is much simpler, faster, and more cost-effective to get rid of added ozone than of added chemical, thus the use of ozone substantially improves how to restore functional capacity of a water cleaning membrane even if residual ozone is left to decay.

The closed environment, in which the method of the present invention is carried out, aims to preserves to the extent possible ozone gas instead of the ozone decaying. So any residual ozone gas can be recovered for recycling and reuse. So even if it is possible to manufacture ozone gas on demand in real time for use in the method, it is expensive and not compulsory or required. Instead a replenishable ozone gas source can be provided, such as a tank of pressurised ozone. So the ozone gas can be taken from a pressurised ozone tank, and/or from a tank of ozone gas captured as residual ozone gas by running the method. On site production of ozone is possible but must be done in advance, collected. Residual ozone can be recycled between different membrane housings and to the ozone gas reservoir as well.

Using ozone gas instead of liquid chemicals is also an advantage when treating food since the removal of ozone gas from the membrane and membrane housing is much easier, faster and cheaper than the removal of the liquid chemical to achieve the level of cleanness and purity stipulated by law when handling foodstuffs. And a further huge advantage is that remains of ozone in the permeate decay quickly.

By emptying the membrane housing so at least a part of the membrane is not covered by liquid particle mixture before the ozone enters the membrane housing it is thus possible to create an ozone gas atmosphere in the emptied part, where the ozone gas will be in optimum contact with the entire membrane surface so that decomposition of e.g. organic matter can take place everywhere on the membrane and the physical injection pressure of the ozone gas be substantially uniform all over said membrane surface.

Furthermore, by emptying the membrane housing so that the membrane is free of contact with liquid, the concentration of ozone gas can be kept much higher especially in an initial phase, thus instantaneously and homogenous, compared to a cleaning agent that is poured into the membrane housing filled with liquid particle mixture like wastewater, or even into a membrane housing partly emptied of liquid particle mixture. When pouring chemical cleaning agents into the membrane housing to act on the membrane, the entire membrane will be treated inhomogeneously, in that the part of the membrane reached first by poured chemicals will be treated first. If the membrane is not completely covered with the prior art chemical cleansing agents and subjected to treatment during a retaining time some of the membrane may be left untreated and non-functional. Simultaneously, applied chemicals must be diluted out of the system, requiring large amounts of clean water. Chemicals are typically recirculated in the entire system, including pumps etc., and therefore require large amounts of chemicals to achieve high concentrations.

Without any liquid in the emptied part of the membrane housing the ozone gas is able to quickly penetrate into all the membrane pores. Therefore, the cleaning time of the membrane becomes very short - a few minutes compared to hours for conventional chemical cleaning of a membrane.

In an exemplary embodiment of the method according to the invention the membrane housing is not emptied prior to injection ozone gas.

In an embodiment of the method according to the invention the membrane housing can be emptied of liquid particle mixture by the injection of ozone gas. By using the injection of ozone gas for emptying the membrane housing, the emptying and the restoration of the ceramic membrane are done in one single step, which means that the interruption time for cleaning the ceramic membrane is short. The membrane housing may be emptied of liquid particle mixture by the ozone gas until the ratio of the remaining liquid particle mixture and the total volume of the membrane housing is less than 45 vol%, more preferably less than 25 vol%, and most preferably less than 5 vol%.

In another exemplary embodiment of the method according to the invention the membrane housing can be emptied by other means that the ozone gas to at least 50 vol% of the liquid particle mixture, more preferably at least 70 vol% of the liquid particle mixture, and most preferably at least 90 vol% of the liquid particle mixture.

Already when half of the membrane housing is emptied the ozone gas had direct access to the surface and pores of the ceramic membrane and can start reacting with substances on a large part of the ceramic membrane, especially if the ceramic membrane is placed high up in the membrane housing.

If at least 70 vol% of the liquid particle mixture, or at least 90 vol% of the membrane housing is emptied, a larger part of the ceramic membrane will be exposed to the ozone gas and the cleaning process will be even faster.

The pressure of the ozone gas can thus empty the at least partly empty membrane housing by blowing out at least a part of the remaining liquid particle mixture, as well as blowing out the liquid of the pores of the membrane. So if the membrane housing cannot be totally emptied of the liquid particle mixture by draining or pumping etc., the ozone gas can physically blow the membrane housing empty, so that the whole membrane can be exposed to the ozone gas and the membrane can be cleaned faster and with the use of minimum of ozone gas.

The ozone gas, or another less expensive pressurized air stream, can also be used for blowing all of the liquid particle mixture out of the membrane housing without prior draining or pumping etc.

The injection direction of the ozone gas through the at least one membrane is opposite to the flow of liquid particle mixture through the membrane when filtering or separating the liquid particle mixture, thus across the membrane to traverse said membrane so that not only does the ozone gas act chemically to decompose organic matter in the pore volume of the membrane, the pressure of the ozone gas advantageously also contribute to press any residues of microscopic deposits and fouling out of the pore volume should any remain at all, so that the pressurized ozone gas have synergistic effects on the restoration of the functionality of the membrane inside the housing. The lifetime of the membrane is substantially increased as well as the cleaning time of the membrane is decreased.

Because the ozone injection direction is opposite the filtering direction the fouling and substances clogging the pores can be pressed out of the ceramic membrane. It would take much longer time, if even possible, to press the fouling through the ceramic membrane.

That the flow of ozone gas through the membrane is opposite to the flow of liquid particle mixture through the membrane also has the benefit that the fouling is pressed back the same way the fouling arrived. No fouling is forced to enter the filtered or separated liquid or permeate on the permeate outlet side of the ceramic membrane.

In an embodiment of the method according to the invention the method further can comprise flushing permeate collected at the permeate outlet through the ceramic membrane after having subjected the ceramic membrane to the ozone gas, optionally recycling the flushed permeate to the flow of liquid particle mixture to be filtered or separated by the membrane to dilute the feed of untreated liquid particle mixture, and/or to rinse the permeate further.

After the ozone gas has cleaned the ceramic membrane by blowing and/or sucking and decomposing the fouling, deposits and substances accumulated on and in the ceramic membrane, back flushing in the ozone injection direction of the at least one ceramic membrane can be conducted as an additional precaution to make sure that there is no or little residues of such matter stuck in and/or on the ceramic membrane. The back flushing liquid can e.g. be produced permeate, which is right at hand since produced in the purposive process of cleaning liquid particle mixture. Flushing the membrane by the permeate is advantageous, since the higher density of the liquid permeate compared to the ozone gas can remove matter, that clogs the ceramic membrane or makes in less efficient, from the ceramic membrane, typically after fouling has been broken down by the ozone gas. The back flushing liquid is not limited to permeate but can be water from any external source. The back flushing liquid, such as the produced permeate, can also remove the residues from the decomposition process by their dissolving, and remove non-decomposable matter physically due to flushing.

The flushed permeate will not be contaminated and will not need to be removed for special treatment, since ozone gas left in the membrane housing and dissolved by the permeate leaves the permeate and breaks down to diatomic oxygen.

The back flush tank connected to the permeate outlet will collect at least a part of the permeate during the filtering or separation of the liquid particle mixture. The collected permeate in the back flush tank provides enough clean fluid to flush the ceramic membrane after the injection of the ozone gas without the need of a long pipe that takes up a lot of space, whereby the liquid particle separation devices used for performing the method can be made very compact.

In an embodiment of the method according to the invention the permeate can be flushed through the ceramic membrane by pumping or sucking the permeate from a back flush tank connected to the permeate outlet by a permeate pump.

With the same benefits of using the back flush tank as mentioned above, using the pump or fan has the further advantage of transporting/pumping the permeate fast and effectively through the ceramic membrane. If the system for filtering or separating a flow of liquid particle mixture is large the pump or fan will be especially advantageous since the pump or the fan of the right size can easily pump or suck a large quantity of the permeate within a short time.

The invention further relates to a liquid particle separation device adapted for at least partly restoring functional capacity of at least ceramic membrane, which liquid particle separation device comprises at least one ceramic membrane situated in a membrane housing having at least a feed inlet and a permeate outlet, a feed source for feeding liquid particle mixture into the membrane housing, a permeate means for receiving filtered or separated permeate from the membrane housing, and a retentate means, for receiving particles or sludge from the membrane housing, and means for draining or emptying the membrane housing before or when the ozone gas is injected from the ozone gas source, an ozone gas source connected to the membrane housing, and ozone injection means for injecting ozone gas at a concentration of at least 120 g/Nm³, where a normal cubic meter (Nm³) is defined as one cubic meter of gas at a temperature of 0°C and a pressure of 1.01325 bar, into the membrane housing, through the at least one ceramic membrane in a direction opposite the filtering direction, and means for re-circulating the ozone gas between an ozone outlet and an ozone inlet of the membrane housing during a regeneration period.

The sludge or particles received at the retentate means from the membrane housing is what is left of the liquid particle mixture when the filtered or separated permeate has been removed by permeation through the membrane.

Means, including but not limited to an outlet, a valve, a tube, or the feed source optionally combined with a pump, a fan, or other means for draining or emptying the membrane housing before or when the ozone gas is injected from the ozone gas source into the membrane housing, through the ceramic membrane, and out of the membrane housing, facilitates emptying of the membrane housing if this is desired, to allow the ozone gas to clean the ceramic membrane. The cleaning time of the membrane is very short - a few minutes compared to hours for conventional cleaning of a membrane.

Using the ozone gas to empty the membrane housing provides a liquid or water particle separation device that has few movable parts and is simple and reliable.

The ozone gas source can be a pressurized reservoir or any other ozone storage means connected to a system configured for generating ozone gas on-site.

Some means for draining, such like a valve, can be situated at the bottom of the membrane housing when restoring functional capacity of the ceramic membrane. In that way, the ceramic membrane housing can be totally or nearly totally emptied by draining the membrane housing simply by gravity. Once the valve is closed, injected ozone is safely confined inside the membrane housing.

By emptying the membrane housing, the concentration of ozone gas can be kept much higher especially in an initial phase compared to a cleaning agent that is poured into the membrane housing already filled with liquid particle mixture.

If there are two or more membranes in the membrane housing, the two or more membranes are preferably positioned in parallel to each other, but can also be put in series. The advantage of having two or more membranes is that it is cheaper to replace one small membrane of several membranes than one large membrane. Simultaneously the hydraulics is better for multiple membrane housings.

The number of ceramic membranes in the membrane housing can be 2, 3, 4, 5, 6, 7, 8, 9, 10 or more. Up to 99 ceramic membranes in a single membrane housing has been tested and demonstrated highly efficient.

The liquid particle separation device has advantageously means for recycling the expensive, unhealthy and highly reactive high concentration ozone gas between an ozone inlet and an ozone outlet of the membrane housing, to reuse the ozone to the extent possible, and at the same time keeping the ozone gas in a closed environment, preferably a closed loop environment.

The ozone gas delivered to the at least one ceramic membrane inside the membrane housing may a mixture of recycled ozone gas and gas from a source of fresh ozone.

In an embodiment of the liquid particle separation device the permeate means can have one or more of a permeate line with a permeate valve, a back flush tank between the permeate valve and the membrane housing

After the injection of the ozone gas and after the permeate valve has been closed, the ceramic membrane can advantageously be flushed by the permeate by pressurizing the permeate by a pump. The back flush tank can expediently collect at least a part of the permeate during the filtering or separation of the liquid particle mixture. The collected permeate in the back flush tank provides enough clean fluid to flush the membrane without the need of a long pipe that takes up a lot of space, so that the back flush tank can be filled with the permeate again.

In an embodiment of the liquid particle separation device the permeate means can comprise one or more of a permeate line with a permeate valve, a back flush tank between the permeate valve and the membrane housing, and a permeate pump connected to the back flush tank for pumping permeate from the back flush tank through the membrane housing and the membrane.

After the injection of the ozone gas and after the permeate valve has been closed, the ceramic membrane can advantageously be flushed by the permeate by pumping the permeate by the permeate pump. The permeate pump has the further advantage of transporting/pumping the permeate fast and effectively through the membrane. If the system for filtering or separating a flow of liquid particle mixture is large the pump will be especially advantageous since the pump of the right size can easily pump a large quantity of the permeate within a short time.

In an embodiment of the liquid particle separation device the means for draining the membrane housing comprises a drain valve in fluid communication with the feed source so that the liquid particle mixture in the membrane housing is drained through the feed source. The drained liquid particle mixture can then easily be filtered or separated by the ceramic membrane when the functional capacity of the ceramic membrane has been restored and the feed source is feeding liquid particle mixture into the membrane housing again. Liquid particle mixture in the membrane housing on the feed source of the ceramic membrane is unfiltered or unseparated. It may in some embodiment therefore be advantageous to drain the liquid particle mixture from the membrane housing to the feed source so that no liquid particle mixture is left unfiltered or unseparated.

In an embodiment of the liquid particle separation device the liquid particle separation device can comprise one or more flowmeters for measuring the flow of liquid particle mixture or flow of filtered or separated permeate.

If the feed source feeds liquid particle mixture through the ceramic membrane at a constant pressure the flow registered by the flowmeter will decline when the ceramic membrane is getting fouled. The flowmeter will give a reliable indication whether the ceramic membrane has to be cleaned, and optionally the flowmeter could be adapted to send or return a signal to a processor that controls the filtering or separating process of the liquid particle mixture that the ceramic membrane has to be cleaned when the flow falls below a certain preset value.

A processor that controls the filtering or separating process of the liquid particle mixture and receives information about the flow through the flowmeter(s) and will interrupt the filtering or separating process to have the membrane housing drained and the ceramic membrane cleaned by injection of ozone gas. By using the flowmeter(s) the process can be totally automatic.

An ozone concentration sensor may be provided to ensure the correct level of ozone gas in the membrane housing. The ozone concentration sensor may be connected to an ozone feed back system controlled by the same processor and being adapted to adjust the required ozone concentration in the membrane housing in response to sensored data of same. Thus if the ozone concentration get below the preset lowest limit of at least 120 gO₃/Nm³ the ozone feed back system takes care of supplementing the ozone gas flow to be injected with extra ozone gas to raise the established required ozone gas concentration level.

The device of the present invention may include additional means to control and regulate the method performed using the liquid particle separation device of the present invention, such means may include pressure sensors, extra valves, temperature sensors, etc.

For example the feed source can comprise a feed source pressure gauge, and the permeate means can comprise a permeate means pressure gauge.

Using the feed source pressure gauge and the permeate means pressure gauge, it is easy to determine whether the ceramic membrane is fouled. An increase in the pressure measured by the feed source pressure gauge compared to the pressure measured by the permeate means pressure gauge will tell that the ceramic membrane is getting more and more fouled. A processor that controls the filtering or separating process of the liquid particle mixture and receives information about the pressures from the feed source pressure gauge and the permeate means pressure gauge will interrupt the filtering or separating process to have the membrane housing drained and the ceramic membrane cleaned by injection of ozone gas, optionally adjust the injection pressure to the established degree of fouling, such as residual fouling after an initial main ozone injection cleaning, if necessary.

Using the feed source pressure gauge, the permeate means pressure gauge and optionally the ozone sensor and the processor means that the method can be done totally automatic.

In an embodiment of the liquid particle separation device the feed source can comprise a first pump for pressurising the liquid particle mixture into the membrane housing and a second pump for pumping liquid particle mixture through the membrane channels to create a cross-flow that continuously clean the at least one ceramic membrane, optionally the first pump and the second pump can be the same. A pump is able to yield the necessary pressure of the liquid particle mixture in the feed source to press liquid particle mixture through the at least one ceramic membrane.

In accordance with the present invention the at least one ceramic membrane of the liquid particle separation device does not degrade or decompose when exposed to ozone gas. Ceramic materials are generally very stable chemically, thermally and mechanically. Ceramic membranes can provide stable water treatment continuously and the filtration performance is not compromised even in high turbidity situations. The usable lifetime of a restorable ceramic membrane can be as long as 15 years or even more, and later the ceramic material of the membrane can be re-used for other purposes. Accordingly, the ceramic membrane is an environmental friendly membrane that does not generate waste.

In an alternative embodiment the first pump of the feed source is replaced by a first suction device for drawing the liquid particle mixture through the membrane.

Also the second pump of the feed source can be replaced by a second suction device for drawing filtered or separated permeate through the at least one ceramic membrane to make permeate and retentate.

The embodiment with one or more suction devices typically uses flat sheet ceramic membranes whereas the embodiments with pumps are typically chosen for tubular ceramic membranes.

The method of the present invention is carried out in a liquid particle separation device utilizing membrane housing and packing materials around the membrane housing capable of handling high ozone concentrations, thus being highly resistant to ozone concentrations of at least 120 gO₃/Nm³. As an example the membrane housing is made of stainless steel SS 316L or (polytetrafluoroethylen) PTFE. Gaskets and seals are also made of ozone gas resistant materials, such as e.g. PTFE or Viton^{®}.

The invention will now be described in further details with reference to the drawing in which
fig. 1 schematically shows a first embodiment of a water or liquid particle separation device for filtering or separating liquid particle mixture,
fig. 2 is a perspective view of a tubular ceramic membrane with a lengthwise sectional view inside a feed channel,
fig. 3 shows a conventional liquid particle separation device obtainable from LiqTech Intl., Industriparken 22C, 2750 Ballerup, Denmark,
fig. 4 shows a second embodiment of a water or liquid particle separation device for filtering or separating liquid particle mixture, and
fig. 5 shows a third embodiment of a water or liquid particle separation device for filtering or separating liquid particle mixture.

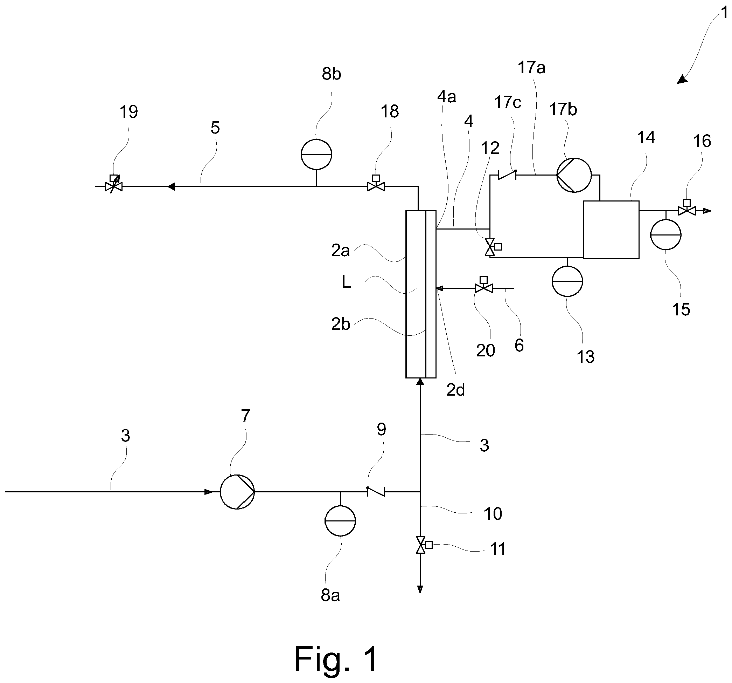

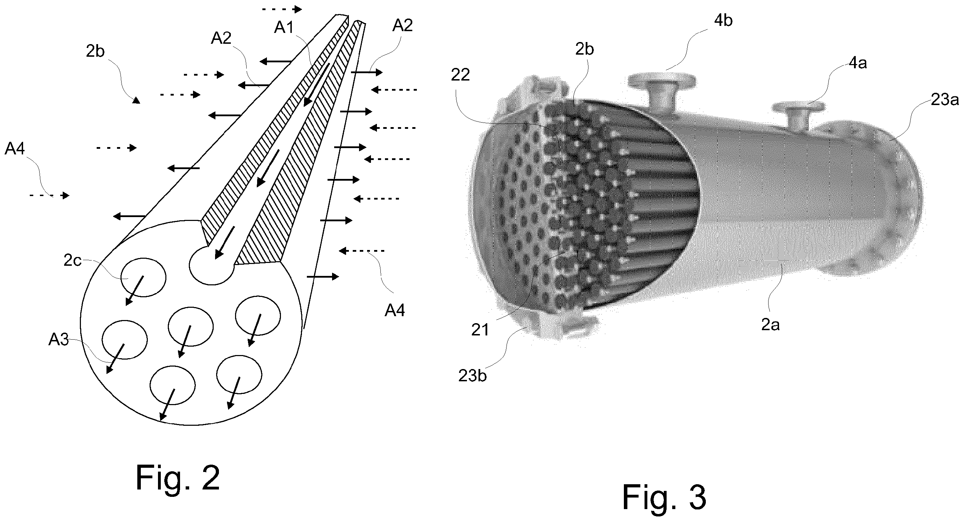

The liquid particle separation device 1 shown in fig. 1 comprises, as illustrated schematically, a membrane housing 2a with one or more tubular ceramic membranes 2b defining membrane channels 2c, as seen in the partly sectioned view of fig. 2 of a tubular ceramic membrane 2b, a feed pipe 3 for feeding liquid particle mixture into the membrane housing 2a, a permeate pipe 4 for receiving filtered or separated permeate through a permeate outlet 4a from the membrane housing 2a after having passed through the tubular ceramic membrane(s) 2b, a retentate pipe 5, for receiving sludge or particles from the membrane housing 2a, and a ozone gas source 6.

The feed pipe 3 comprises a feed pump 7 for pumping the liquid particle mixture into the membrane housing 2a and along the membrane channels 2c of the tubular ceramic membrane(s) 2b in a cross-flow mode, as indicated by arrows A1 in fig. 2, a feed pipe pressure gauge 8a, and a first check valve 9 only allowing fluid to pass from the feed pump 7 to the tubular ceramic membrane (s) 2b. The feed pipe 3 is equipped with a drain pipe 10 with a drain valve 11.

The permeate pipe 4 comprises a first permeate valve 12, a permeate pressure gauge 13, a back flush tank 14, a flowmeter 15, and a second permeate valve 16. A second pipe 17a connects parallel to the first permeate valve 12 the back flush tank 14 and the permeate outlet 4a, and comprises a permeate pump 17b and a permeate check valve 17c only allowing fluid to pass from the permeate pump 17b to the permeate outlet 4a.

The retentate pipe 5 comprises a retentate valve 18, and a retentate pressure gauge 8b and a regulating valve 19.

Ozone gas from the ozone gas source 6 enters the membrane housing 2a on the permeate side of the tubular ceramic membrane(s) 2b via an ozone inlet 2d in the membrane housing 2a when an ozone source valve 20 is opened, passes through the tubular ceramic membrane(s) 2b, and exits the membrane housing 2a via the feed pipe 3.

When starting the filtering or separation of the liquid particle mixture the drain valve 11 and the ozone source valve 20 are closed, the first 12 and second 16 permeate valves, as well as the retentate valve 18 are opened and the feed pump 7 is started.

By regulating the regulating valve 19 of the retentate pipe 5 and measuring the pressure by the retentate pressure gauge 8b a high enough pressure in the feed pipe 3 can be kept so that the liquid in the liquid particle mixture is pressed in the filtering direction through the tubular ceramic membrane(s) 2b into the permeate pipe 4, as indicated by arrow A2 in fig. 2, and optionally into the back flush tank 14, and through the second permeate valve 16, while the particles or sludge from the liquid particle mixture enter the retentate pipe 5, as indicated by arrows A3 in fig. 2.

After a while of liquid particle mixture filtering or liquid particle separation, deposits or fouling will build up inside the tubular ceramic membrane(s) 2b causing the feed pump 7 to work harder or the flow of filtered permeate through the permeate pipe 4 to decrease or a combination of both. This can be discovered by an increase in the so-called transmembrane pressure, which is the pressure difference measured by the feed pipe pressure gauge 8a and permeate pressure gauge 13 when the flow is more or less kept constant. That deposits are built up in the tubular ceramic membrane(s) can also or instead be detected by a drop in the flow measured by the flowmeter 15 when the transmembrane pressure or the power of the feed pump 7 is kept more or less constant.

When the energy consumption to drive the feed pump 7 is too high and/or the flow of filtered or separated permeate is too low the tubular ceramic membrane(s) 2b has too be cleaned.

To clean the tubular ceramic membrane(s) 2b, the feed pump 7 is switched off, the first permeate valve 12 and the retentate valve 18 are closed, and then the drain valve 11 is opened. Liquid particle mixture inside the membrane housing 2a will be drained through the drain valve 11 and out through the drain pipe 10. When the membrane housing is more or less emptied the ozone source valve 20 is opened letting ozone gas into the membrane housing, through the tubular ceramic membrane(s) 2b, as indicated by dashed arrow A4, and out through the drain pipe 10, which in the first embodiment thus serves as the ozone outlet.

The ozone gas will oxidize the deposits inside and on the tubular ceramic membrane(s) 2b so that deposits are broken down. Additionally the pressure of the ozone gas will push the deposits out of the ceramic membrane through the drain pipe. Once the tubular ceramic membrane(s) 2b is cleaned the ozone source valve 20 is closed and the functional capacity of the liquid particle separation device1 1 has been restored and it is ready to filter a new volume of liquid particle mixture.

Optionally the ceramic membrane can however be further cleaned by flushing filtered or separated permeate from the back flush tank 14. In that case, the second permeate valve 16 is closed as well as the first permeate valve 12 followed by the starting of the permeate pump 17b that will pump the permeate in the back flush tank 14 through the ceramic membrane and out of the drain pipe 10 so that any remaining deposits in the ceramic membrane are removed.

The conventional membrane filtering device seen in fig. 3 has multiple tubular ceramic membranes 2b arranged in a close bundle inside the membrane housing 2a, that has two permeate outlets 4a,4b. Feed inlet and retentate outlets are placed in the ends 23a,23b of the membrane housing 2a. Ozone gas resistant gaskets 21 and seals 22 are provided at opposite annular flanges 23a, 23b, as indicated to the right in fig. 3. End cones of an ozone resistant material (SS 316 L, PTFE or similar) seals the membrane housing and allows no gas to leave other ways than through the outlets so no ozone leaks to the environment to chemically attack components, such as valve and gauges, in the operational environment.

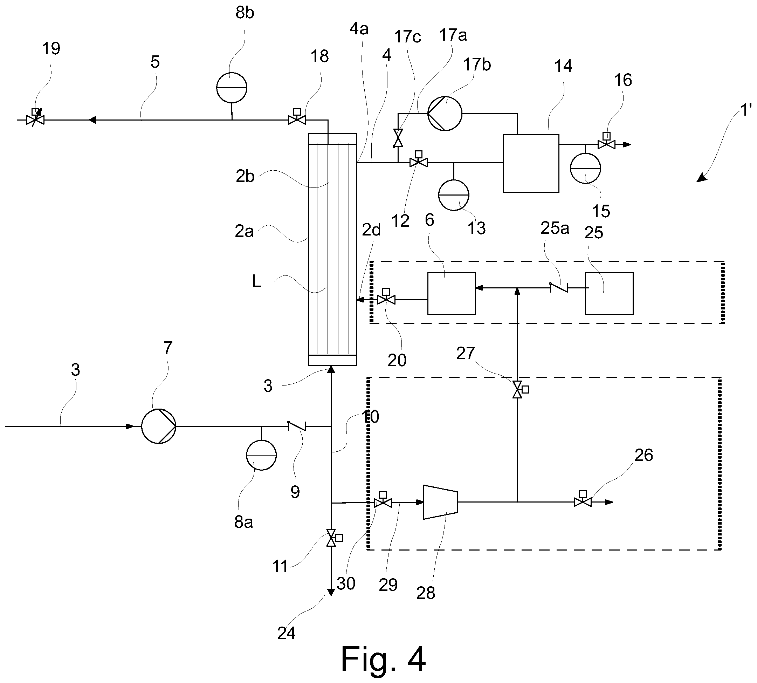

Fig. 4 shows a second embodiment of a liquid particle separation device 1', in which residual ozone gas 24 is captured and recycled. The second embodiment otherwise corresponds to the first embodiment and for like parts same reference numerals are used.

During normal operation the feed pump 7 presses water into the membrane channels 2c of the tubular ceramic membranes 2b inside the membrane housing 2a. The regulating valve 19 is used to force water out through the tubular ceramic membranes 2b and into the permeate pipe 4. The pressure on the feed pipe 3, the retentate pipe 5 and the permeate pipe 4 determines the permeate pressure.

Either when the transmembrane pressure reaches a set-point or a time is elapsed the cleaning is activated. A time before this the ozone generator is activated and fills the ozone tank 6 with ozone gas, under the control of ozone check valve 25a, thereby secure that no water running backwards into the ozone source. During this filling ozone source valve 20 is closed.

Cleaning is conducted along the following steps:
a. The feed pump 7 shuts off.
b. The retentate valve 18 closes.
c. The first permeate valve 12 closes.
d. The ozone source valve 20 opens and allows ozone to flow into the membrane housing 2a via the ozone inlet 2d.
e. The drain valve 11 opens to discharge retentate, liquid and residual ozone. Thus the drain valve serves as the ozone outlet. A separate ozone outlet may be provided at any part of the membrane housing.

Drained residual ozone 24 is re-circulated, either for another membrane housing 2a, in which case first recirculation valve 26 opens during the ozone gas cleaning, or for the same membrane housing 2b, in which case the second recirculation valve 27 opens instead.

The residual ozone 24 is pressurized prior to reuse by ozone pressure increaser 28 inserted in residual ozone pipe 29 between the drain valve 11 and the first and second recirculation valves 26,27.

Ozone control valve 30 inserted in the drain pipe 10 between the drain valve 10 and the ozone pressure increaser 28 controls whether or not to recycle residual ozone gas 24.

When the cleaning is finished ozone source valve 20 and drain valve 11 closes and the ozone generator 25 shuts down. Either a back flush is performed or the liquid particle separation device 1' returns directly to normal production. Back flushing is done by opening drain valve 11 and activating the permeate pump 17b.

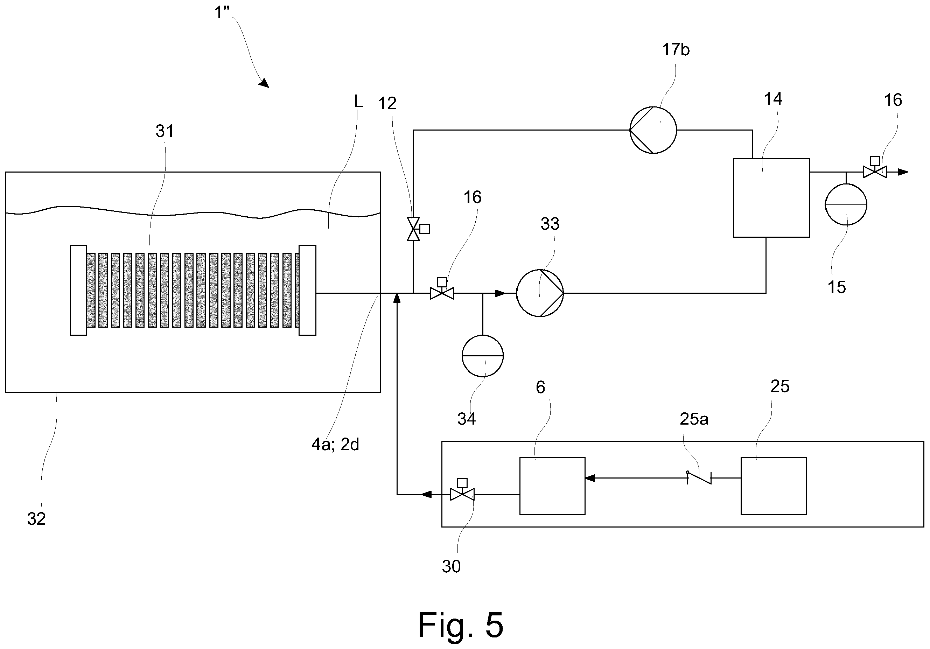

Fig. 5 shows a third embodiment of a liquid particle separation device 1" adapted for cleaning a batch or feed of liquid particle mixture L utilising ceramic flat sheet membrane(s) 31 submersed in a liquid particle mixture tank 32.

For the flat sheet ceramic membrane device and system the functional principle is somewhat different from the functional principle described above for the tubular ceramic membranes:
During normal operation the filtration pump 33 suck liquid particle mixture L through the flat sheet membranes 31 by vacuum. A pressure transmitter 34 is used to regulate this vacuum. From the filtration pump 33 the permeate enters a back flushing tank 14 and then flows out via second permeate valve 16.

Either when the flowmeter 15 detects that trans membrane pressure reaches a set-point or a time is elapsed the cleaning is activated. A time before this the ozone generator 25 is activated and fills the ozone tank 6, with ozone gas, and the ozone check valve 25a ensures no water flows backwards into the ozone source 25. During ozone cleaning the first permeate valve 12 and the second permeate valve 16 are closed and ozone control valve 30 opens, allowing ozone gas to enter the flat sheet membrane stack. The level of liquid particle mixture L in the liquid particle mixture tank 32 is not affected. The ozone gas enters the water and/or liquid particle mixture L in the liquid particle mixture tank 32 via the ceramic membrane 31 as small bubbles.

After ozonation ozone control valve 30 closes and either a back flush is performed, in which the first permeate valve 12 opens and the back flush pump 17b is switched on, or the third embodiment of a liquid particle separation device 1" goes to normal production and filtering.

The concentration unit gO₃/Nm³ used in the Examples below refers to grams of ozone per normal cubic meter, where a normal cubic meter is defined as one cubic meter of gas at reference parameters: temperature: 0°C, pressure: 1.01325 bar. A conventional ceramic membrane is purchased, the membrane housing is enclosed in a jacket of ozone gas resistant materials, and gaskets and seals are replaced with new gaskets and seals having the required resistant to high concentration ozone gas used in the present invention. Thus the conventional ceramic membranes need to be modified for use in the present invention.

### Example 1: Filtering of seawater for use in fish farming:

A 0.04 µm pore size tubular ceramic membrane, COMEM^{®} produced by Liqtech, was used with an outer diameter of 25 mm and a length of 305 mm (COM0250305 UF-03). The flux (liter per m² per hour (LMH)) through the membrane at start up was 2500 LMH at a transmembrane pressure (TMP) of 0,82 bar. After 3 h of filtering the flux had declined to 446 LMH keeping the TMP constant. By exposing the membrane to 120 gO₃/Nm³ for 5 min. at ozone pressure of 2 bar it is possible to completely regenerate the membrane so that the flux again is 2500 LMH at this pressure. The used ozone gas will break down into harmless O₂.

### Example 2: Filtrering of biologically sewage:

A 0.04 µm pore size tubular ceramic membrane, COMEM^{®} produced by Liqtech, was used with an outer diameter of 146 mm and a length of 865 mm (COM1460865-UF). The flux through the membrane at start up was 1375 LMH at a TMP of 0,68 bar. After 4.5 h of filtering the flux had declined to 375 LMH keeping the TMP constant. By exposing the membrane to 200 gO₃/Nm³ for 5 min at ozone pressure of 2 bar it is possible to completely regenerate the membrane so that the flux again is 1375 LMH at this pressure.

### Example 3: Separation of activated sludge:

A 0.2 µm ceramic flat sheet membrane module produced by Cembrane (SICFM-6040-DO-T-520) was used for filtering activated sludge. The flux through the membrane after 5 minutes of stabilization was 112 LMH at a TMP of -0.25 bar. After 1 h of filtering the flux had declined to 55 LMH keeping the TMP constant. By exposing the membrane to 150 gO₃/Nm³ for 2 min. at ozone pressure of 2 bar it is possible to completely regenerate the membrane so that the flux again is 112 LMH at this pressure.

### Example 4: Filtration of water with edible oil:

A 0.5 µm Pall Membralox (EP3730) tubular ceramic membrane was applied for filtering water containing edible oil. The initial flux through the membrane was 234 LMH at a TMP of 0.32 bar. After 5 h of filtering the flux had declined to 156 LMH keeping the TMP constant. By exposing the membrane to 150 gO₃/Nm³ for 5 min. at ozone pressure of 2 bar it is possible to completely regenerate the membrane so that the flux again is >234 LMH at this pressure. In this specific case the flux was actually higher than the initial flux, prior to the initial start-up the membrane was cleaned with conventional membrane cleaning agents, and the results indicate that ozone is superior compared to these cleaning agents.

## Claims

1. A method of at least partly restoring functional capacity of at least one ceramic membrane (2b;31) for filtering or separating a flow of liquid particle mixture (L), wherein the at least one ceramic membrane (2b; 31) is situated in a membrane housing (2a;32) having at least a feed inlet (3) and a permeate outlet (4a) for produced permeate, and wherein the flow of liquid particle mixture (L) is provided in a filtering direction (A2) of the at least one ceramic membrane (2b; 31) and after a filtering period draining the membrane housing (2a;32) at least partly of liquid particle mixture (L) via an emptying outlet (10) prior to injection of an ozone gas or when the ozone gas is injected, **characterized in that** the method comprises subjecting the at least one ceramic membrane (2b;31) to a membrane regeneration step in a regeneration period in which ozone gas at a concentration of at least 120 g/Nm³, where a normal cubic meter (Nm³) is defined as one cubic meter of gas at a temperature of 0°C, and a pressure of 1.01325 bar, is injected into the membrane housing (2a;32) via an ozone inlet (2d) and passed through the at least one ceramic membrane (2b;31) in an ozone injection direction (A4), which is opposite the filtering direction (A2), and re-circulating used ozone gas between an ozone outlet (11) of the membrane housing (2b;31) and the ozone inlet (2d) of the membrane housing (2b;31) during the membrane regeneration step.

2. A method according to claim 1, **characterized in that** the concentration of ozone in the ceramic membrane regeneration step is at least 150 g/Nm³, or at least 175 g/Nm³, or at least 200 g/Nm³.

3. A method according to any of claims 1 or 2, **characterized in that** the pressure of the injected ozone gas in the membrane regeneration step of the at least one ceramic membrane (2b;31) is selected to be above the bubble point of the specific ceramic membrane (2b;31), such as at least 1.5 bar, preferably at least 1.8 bar, more preferred at least 2.0 bar, and more preferred 2.2 bar.

4. A method according to any of claims 1, 2 or 3 **characterized in that** the at least one ceramic membrane (2b; 31) is a tubular ceramic membrane (2b) or a flat sheet ceramic membrane (31).

5. A method according to any of the preceding claims 1 - 4, **characterized in that** the method comprises an ozone gas capturing step in which the ozone gas used in the regeneration period is captured and collected for reuse in a subsequent or same regeneration step.

6. A method according to any of the preceding claims 1 - 5, **characterized in that** the method comprises the step of delivering to the at least one ceramic membrane (2b;31) inside the membrane housing (2a;32) a mixture of recycled ozone gas and gas from an ozone gas source (6;25) of fresh ozone gas.

7. A method according to any of the preceding claims 1 - 6, **characterized in that** the pressure of the ozone gas displaces at least a part of the liquid particle mixture (L) from the membrane housing (2a).

8. A method according to any of the preceding claims 1 - 7, **characterized in that** the method further comprises the step of flushing permeate collected at the permeate outlet (4a) through the at least one ceramic membrane (2b;31) after having subjected the at least one ceramic membrane (2b; 31) to the ozone gas in the direction (A4) opposite the filtering direction (A2), optionally recycling the flushed permeate to the flow of liquid particle mixture (L) to be filtered or separated by the at least one ceramic membrane (2b;31).

9. A method according to claim 8, **characterized in that** the permeate is flushed through the at least one ceramic membrane (2b;31) by pumping the permeate from a back flush tank (14) connected to the permeate outlet (4a).

10. A method according to any of the preceding claims 1 - 9, **characterized in that** the flow of liquid particle mixture (L) is pumped or sucked through the at least one ceramic membrane (2b;31).

11. A method according to any of the preceding claims 1 - 10, **characterized in that** the at least one ceramic membrane (2b; 31) is operated in a cross-flow mode.

12. A liquid particle separation device (1;1',1") adapted for at least partly restoring functional capacity of at least one ceramic membrane (2b;31), which liquid particle separation device (1;1';1") comprises at least one ceramic membrane (2b;31) situated in a membrane housing (2a; 32) having at least a feed inlet (3) and a permeate outlet (4a), a feed source (3) for feeding liquid particle mixture into the membrane housing (2a;32), a permeate means (4,4a) for receiving filtered or separated permeate from the membrane housing (2a;32), a retentate means (5), for receiving particles or sludge from the membrane housing (2a;32) and means (10) for draining or emptying the membrane housing (2a;32) before or when an ozone gas is injected from an ozone gas source, **characterized in that** the liquid particle separation device (1;1';1") further comprises the ozone gas source (6;25) connected to the membrane housing (2a;31), ozone injection means for injecting ozone gas at a concentration of at least 120 g/Nm³, where a normal cubic meter (Nm³) is defined as one cubic meter of gas at a temperature of 0°C, and a pressure of 1.01325 bar, into the membrane housing (2a;32), through the at least one ceramic membrane (2b; 31) in an ozone injection direction (A4) opposite the filtering direction (A2), and means for re-circulating the ozone gas between an ozone outlet (11) and an ozone inlet (2d) of the membrane housing (2a;32) during a membrane regeneration step.

13. A liquid particle separation device (1;1';1'') according to claim 12, **characterized in that** the membrane housing material, and packaging of the membrane housing (2a;32), gaskets and seals are selected amongst materials resistant to ozone concentration of at least 120 gO₃/Nm³, such as stainless steel and ozone resistant polymeric materials.

14. A liquid particle separation device (1;1';1'') according to claims 12 or 13, **characterized in that** the number of ceramic membranes (2b;31) in the membrane housing (2a;32) is 2, 3, 4, 5, 6, 7, 8, 9, 10 or more.

15. A liquid particle separation device (1;1';1'') according to claims 12, 13 or 14, **characterized in that** the ozone gas source (6; 25) is an ozone generator (25) configured for supplying a pressurised ozone reservoir (6).

16. A liquid particle separation device (1;1';1'') according to any of the preceding claims 12 - 15, **characterized in that** the device is configured such that the ozone gas delivered to the at least one ceramic membrane (2b;31) inside the membrane housing (2a;32) is a mixture of recycled ozone gas and gas from a source of fresh ozone.

17. A liquid particle separation device (1;1';1") according to any of the preceding claims 12 - 16, **characterized in that** the ozone gas source (6;25) is in fluid communication with the membrane housing (2a;32) at the permeate means (4,4a).

18. A liquid particle separation device (1;1') according to any of the preceding claims 12 - 17, **characterized in that** the permeate means (4,4a) comprises one or more of a permeate line (4) with a permeate valve (16), a back flush tank (14) between the permeate valve (16) and the membrane housing (2a).

19. A liquid particle separation device (1;1';1'') according to any of the preceding claims 12 - 18, **characterized in that** the permeate means (4,4a) comprises one or more of a permeate line (4) with a permeate valve (16), a back flush tank (14) between the permeate valve (16) and the membrane housing (2a), and a permeate pump (17b) connected to the back flush tank (14) for pumping permeate from the back flush tank (14) through the membrane housing (2a) and the at least one ceramic membrane (2b).

20. A liquid particle separation device (1;1') according to any of the claims 12 - 19, **characterized in that** the means (10) for draining or emptying the membrane housing (2a; 32) comprises a drain or emptying valve (11) in fluid communication with the feed source (3).

21. A liquid particle separation device (1;1';1'') according to any of the preceding claims 12 - 20, **characterized in that** the liquid particle separation device (1;1';1'') comprises a flowmeter (15) for measuring the flow of filtered or separated permeate.

22. A liquid particle separation device (1;1';1") according to any of the preceding claims 12 - 21, **characterized in that** the feed source (3) comprises a feed source pressure gauge (8a), the permeate means (4,4a) comprises a permeate means pressure gauge (13), and the ozone injection means comprises a ozone concentration sensor.

23. A liquid particle separation device (1;1') according to any of the preceding claims 12 - 22, **characterized in that** the feed source (3) comprises a first pump (7) for pumping of the liquid particle mixture (L) into the at least one ceramic membrane (2b;31).

24. A liquid particle separation device (1;1';1'') according to claim 23, **characterized in that** that the feed source (3) comprises a second pump (17b) for pumping filtered or separated permeate through the at least one ceramic membrane (2b;31).

25. A liquid particle separation device (1;1';1'') according to claim 23 or claim 24, **characterized in that** the first pump (7) of the feed source (3) is replaced by a first suction device (33) for drawing the liquid particle mixture (L) through the membrane (2a;31).

26. A liquid particle separation device (1;1';1'') according to claim 24, **characterized in that** the second pump of the feed source (3) is replaced by a second suction device for drawing filtered or separated permeate through the at least one ceramic membrane (2b).

## Patentansprüche

1. Verfahren zur zumindest teilweisen Wiederherstellung der Funktionsfähigkeit mindestens einer keramischen Membran (2b; 31) zum Filtern oder Trennen eines Stroms einer flüssigen Teilchenmischung (L), wobei die mindestens eine keramische Membran (2b; 31) in einem Membrangehäuse (2a; 32) angeordnet ist, das mindestens einen Zufuhreinlass (3) und einen Permeatauslass (4a) für erzeugtes Permeat aufweist, und wobei der Strom von flüssiger Teilchenmischung (L) in einer Filtrierungsrichtung (A2) der mindestens einen keramischen Membran (2b; 31) vorgesehen ist und nach einer Filtrierperiode das Membrangehäuse (2a; 32) zumindest teilweise von flüssiger Teilchenmischung (L) über einen Entleerungsauslass (10) vor der Injektion eines Ozongases oder wenn das Ozongas injiziert wird, entleert wird, **dadurch gekennzeichnet, dass** das Verfahren das Unterziehen der mindestens einen keramischen Membran (2b; 31) einem Membranregenerationsschritt in einer Regenerationsperiode umfasst, in der Ozongas mit einer Konzentration von mindestens 120 g/Nm³, wobei ein Normkubikmeter (Nm³) als ein Kubikmeter Gas bei einer Temperatur von 0 °C und einem Druck von 1,01325 bar definiert ist, in das Membrangehäuse (2a; 32) über einen Ozoneinlass (2d) injiziert und durch die mindestens eine keramische Membran (2b; 31) in einer Ozoninjektionsrichtung (A4) geschickt wird, die entgegengesetzt zur Filtrierungsrichtung (A2) ist, und Rückführen von gebrauchtem Ozongas zwischen einem Ozonauslass (11) des Membrangehäuses (2b; 31) und dem Ozoneinlass (2d) des Membrangehäuses (2b; 31) während des Membranregenerationsschritts.

2. Verfahren nach Anspruch 1, **dadurch gekennzeichnet, dass** die Konzentration von Ozon im keramischen Membranregenerationsschritt mindestens 150 g/Nm³ oder mindestens 175 g/Nm³ oder mindestens 200 g/Nm³ beträgt.

3. Verfahren nach einem der Ansprüche 1 oder 2, **dadurch gekennzeichnet, dass** der Druck des injizierten Ozongases im Membranregenerationsschritt der mindestens einen keramischen Membran (2b; 31) so gewählt wird, dass er oberhalb des Blasenpunktes der konkreten keramischen Membran (2b; 31) liegt, wie z.B. mindestens 1,5 bar, vorzugsweise mindestens 1,8 bar, besser mindestens 2,0 bar und noch besser 2,2 bar.

4. Verfahren nach einem der Ansprüche 1, 2 oder 3, **dadurch gekennzeichnet, dass** die mindestens eine keramische Membran (2b; 31) eine rohrförmige keramische Membran (2b) oder eine keramische Flachmembran (31) ist.

5. Verfahren nach einem der vorhergehenden Ansprüche 1 - 4, **dadurch gekennzeichnet, dass** das Verfahren einen Ozongas-Erfassungsschritt enthält, bei dem das in der Regenerationsperiode verwendete Ozongas erfasst und zur Wiederverwendung in einem nachfolgenden oder im selben Regenerationsschritt gesammelt wird.

6. Verfahren nach einem der vorhergehenden Ansprüche 1 - 5, **dadurch gekennzeichnet, dass** das Verfahren den Schritt des Zuführens einer Mischung von recyceltem Ozongas und Gas von einer Ozongasquelle (6; 25) von frischem Ozongas zu der mindestens einen keramischen Membran (2b; 31) im Membrangehäuse (2a; 32) umfasst.

7. Verfahren nach einem der vorhergehenden Ansprüche 1 - 6, **dadurch gekennzeichnet, dass** der Druck des Ozongases zumindest einen Teil der flüssigen Teilchenmischung (L) aus dem Membrangehäuse (2a) verdrängt.

8. Verfahren nach einem der vorhergehenden Ansprüche 1 - 7, **dadurch gekennzeichnet, dass** das Verfahren ferner den Schritt des Spülens des Permeats, das am Permeatauslass (4a) gesammelt wurde, durch die mindestens eine keramische Membran (2b; 31) umfasst, nachdem die mindestens eine keramische Membran (2b; 31) dem Ozongas in der Richtung (A4) entgegengesetzt zur Filtrierungsrichtung (A2) ausgesetzt wurde, wobei das gespülte Permeat optional zum Strom der flüssigen Teilchenmischung (L) rückgeführt wird, der durch die eine keramische Membran (2b; 31) gefiltert oder aufgetrennt werden soll.

9. Verfahren nach Anspruch 8, **dadurch gekennzeichnet, dass** das Permeat durch die mindestens eine keramische Membran (2b; 31) durch Pumpen des Permeats von einem Rückspültank (14) gespült wird, der mit dem Permeatauslass (4a) verbunden ist.

10. Verfahren nach einem der vorhergehenden Ansprüche 1 - 9, **dadurch gekennzeichnet, dass** der Strom der flüssigen Teilchenmischung (L) durch die mindestens eine keramische Membran (2b; 31) gepumpt oder gesaugt wird.

11. Verfahren nach einem der vorhergehenden Ansprüche 1 - 10, **dadurch gekennzeichnet, dass** die mindestens eine keramische Membran (2b; 31) in einem Querstromverfahren betrieben wird.

12. Flüssigkeitsteilchen-Trennvorrichtung (1;1';1"), die für das zumindest teilweise Wiederherstellen der funktionellen Kapazität von mindestens einer keramischen Membran (2b; 31) ausgelegt ist, wobei die Flüssigkeitsteilchen-Trennvorrichtung (1;1';1") mindestens eine keramische Membran (2b; 31) umfasst, die sich in einem Membrangehäuse (2a; 32) befindet, das zumindest einen Zufuhreinlass (3) und einen Permeatauslass (4a), eine Zufuhrquelle (3) zum Zuführen von flüssiger Teilchenmischung in das Membrangehäuse (2a; 32), ein Permeatmittel (4, 4a) zum Aufnehmen von gefiltertem oder abgetrenntem Permeat aus dem Membrangehäuse (2a; 32), ein Retentatmittel (5) zum Aufnehmen von Teilchen oder Schlamm aus dem Membrangehäuse (2a; 32) und Mittel (10) zum Ablassen oder Entleeren des Membrangehäuses (2a; 32), bevor oder wenn ein Ozongas aus einer Ozongasquelle injiziert wird, **dadurch gekennzeichnet, dass** die Flüssigkeitsteilchen-Trennvorrichtung (1;1';1") ferner die Ozongasquelle (6; 25), die mit dem Membrangehäuse (2a; 31) verbunden ist, Ozoninjektionsmittel zum Injizieren von Ozongas bei einer Konzentration von mindestens 120 g/Nm³, wobei ein Normkubikmeter (Nm³) als ein Kubikmeter Gas bei einer Temperatur von 0 °C und einem Druck von 1,01325 bar definiert ist, in das Membrangehäuse (2a; 32) durch die mindestens eine keramische Membran (2b; 31) in einer Ozoninjektionsrichtung (A4) entgegengesetzt zur Filtrierungsrichtung (A2), und Mittel zum Rückführen von Ozongas zwischen einem Ozonauslass (11) und einem Ozoneinlass (2d) des Membrangehäuses (2a; 32) während eines Membranregenerationsschrittes enthält.

13. Flüssigkeitsteilchen-Trennvorrichtung (1;1';1") nach Anspruch 12, **dadurch gekennzeichnet, dass** das Material des Membrangehäuses und das Packmaterial des Membrangehäuse (2a; 32), Dichtungen und Dichtungsringe unter Materialien ausgewählt werden, die bei einer Konzentration von mindestens 120 g O₃/Nm³ beständig sind, wie z.B. rostfreier Stahl und ozonbeständige Polymermaterialien.

14. Flüssigkeitsteilchen-Trennvorrichtung (1;1';1") nach Anspruch 12 oder 13, **dadurch gekennzeichnet, dass** die Zahl der keramischen Membranen (2b; 31) im Membrangehäuse (2a; 32) 2, 3, 4, 5, 6, 7, 8, 9, 10 oder mehr beträgt.

15. Flüssigkeitsteilchen-Trennvorrichtung (1;1';1") nach Anspruch 12, 13 oder 14, **dadurch gekennzeichnet, dass** die Ozongasquelle (6; 25) ein Ozongenerator (25) ist, der zum Versorgen eines Ozondruckbehälters (6) ausgelegt ist.

16. Flüssigkeitsteilchen-Trennvorrichtung (1;1';1") nach einem der vorhergehenden Ansprüche 12 - 15, **dadurch gekennzeichnet, dass** die Vorrichtung so ausgelegt ist, dass das Ozongas, das der mindestens einen keramischen Membran (2b; 31) im Membrangehäuse (2a; 32) zugeführt wird, eine Mischung von recyceltem Ozongas und Gas von einer Quelle von frischem Ozongas ist.

17. Flüssigkeitsteilchen-Trennvorrichtung (1;1';1") nach einem der vorhergehenden Ansprüche 12 - 16, **dadurch gekennzeichnet, dass** die Ozongasquelle (6; 25) in Fluidkommunikation mit dem Membrangehäuse (2a; 32) am Permeatmittel (4, 4a) steht.

18. Flüssigkeitsteilchen-Trennvorrichtung (1; 1') nach einem der vorhergehenden Ansprüche 12 - 17, **dadurch gekennzeichnet, dass** das Permeatmittel (4, 4a) ein oder mehr Elemente aus einer Permeatleitung (4) mit einem Permeatventil (16), einem Rückspültank (14) zwischen dem Permeatventil (16) und dem Membrangehäuse (2a) umfasst.

19. Flüssigkeitsteilchen-Trennvorrichtung (1;1';1") nach einem der vorhergehenden Ansprüche 12 - 18, **dadurch gekennzeichnet, dass** das Permeatmittel (4, 4a) ein oder mehr Elemente aus einer Permeatleitung (4) mit einem Permeatventil (16), einem Rückspültank (14) zwischen dem Permeatventil (16) und dem Membrangehäuse (2a) und einer Permeatpumpe (17b) umfasst, die an den Rückspültank (14) zum Pumpen von Permeat vom Rückspültank (14) durch das Membrangehäuse (2a) und die mindestens eine keramische Membran (2b) angeschlossen ist.

20. Flüssigkeitsteilchen-Trennvorrichtung (1; 1') nach einem der vorhergehenden Ansprüche 12 - 19, **dadurch gekennzeichnet, dass** das Mittel (10) zum Ablassen oder Entleeren des Membrangehäuses (2a; 32) ein Ablass- oder Entleerungsventil (11) in Fluidkommunikation mit der Zufuhrquelle (3) umfasst.

21. Flüssigkeitsteilchen-Trennvorrichtung (1;1';1") nach einem der vorhergehenden Ansprüche 12 - 20, **dadurch gekennzeichnet, dass** die Flüssigkeitsteilchen-Trennvorrichtung (1;1';1") einen Durchflussmesser (15) zum Messen des Stroms des gefilterten oder abgetrennten Permeats umfasst.

22. Flüssigkeitsteilchen-Trennvorrichtung (1;1';1") nach einem der vorhergehenden Ansprüche 12 - 21, **dadurch gekennzeichnet, dass** die Zufuhrquelle (3) ein Zufuhrquellen-Druckmessgerät (8a) umfasst, das Permeatmittel (4, 4a) umfasst ein Permeatmittel-Druckmessgerät (13), und das Ozoninjektionsmittel umfasst einen Ozonkonzentrationssensor.

23. Flüssigkeitsteilchen-Trennvorrichtung (1; 1') nach einem der vorhergehenden Ansprüche 12 - 22, **dadurch gekennzeichnet, dass** die Zufuhrquelle (3) eine erste Pumpe (7) zum Pumpen der flüssigen Teilchenmischung (L) in die mindestens eine keramische Membran (2b; 31) umfasst.

24. Flüssigkeitsteilchen-Trennvorrichtung (1;1';1") nach Anspruch 23, **dadurch gekennzeichnet, dass** die Zufuhrquelle (3) eine zweite Pumpe (17b) zum Pumpen von gefiltertem oder abgetrenntem Permeat durch die mindestens eine keramische Membran (2b; 31) umfasst.

25. Flüssigkeitsteilchen-Trennvorrichtung (1;1';1") nach Anspruch 23 oder Anspruch 24, **dadurch gekennzeichnet, dass** die erste Pumpe (7) der Zufuhrquelle (3) durch eine erste Saugvorrichtung (33) zum Saugen der flüssigen Teilchenmischung (L) durch die Membran (2a; 31) ersetzt ist.

26. Flüssigkeitsteilchen-Trennvorrichtung (1;1';1") nach Anspruch 24, **dadurch gekennzeichnet, dass** die zweite Pumpe der Zufuhrquelle (3) durch eine zweite Saugvorrichtung zum Saugen von gefiltertem oder abgetrenntem Permeat durch die mindestens eine keramische Membran (2b) ersetzt ist.

## Revendications

1. Un procédé de restauration au moins partielle de la capacité fonctionnelle d'au moins une membrane céramique (2b, 31) pour filtrer ou séparer un flux d'un mélange de particules liquides (L), dans lequel l'au moins une membrane céramique (2b, 31) est située dans un logement de membrane (2a, 32) ayant au moins une entrée d'alimentation (3) et une sortie de perméat (4a) pour un perméat produit, et dans lequel le flux du mélange de particules liquides (L) est fourni dans une direction de filtration (A2) de l'au moins une membrane céramique (2b, 31) et après une période de filtration drainant le logement de membrane (2a, 32) au moins partiellement par le mélange de particules liquides (L) par l'intermédiaire d'une sortie de vidange (10) préalablement à une injection de gaz ozone ou lorsque le gaz ozone est injecté,
**caractérisé en ce que** le procédé comprend :
soumettre l'au moins une membrane céramique (2b, 31) à une étape de régénération de membrane en une période de régénération pendant laquelle le gaz ozone, à une concentration d'au moins 120 g/Nm³, où un mètre cube normal (Nm³) est défini comme étant un mètre cube de gaz à une température de 0°C, et à une pression de 1,01325 bar, est injecté dans le logement de membrane (2a, 32) par l'intermédiaire d'une entrée d'ozone (2d) et passé à travers l'au moins une membrane céramique (2b, 31) dans une direction d'injection d'ozone (A4), qui est opposée à la direction de filtration (A2), et faire recirculer le gaz ozone utilisé entre une sortie d'ozone (11) du logement de membrane (2b, 31) et l'entrée d'ozone (2d) du logement de membrane (2b, 31) pendant l'étape de régénération de la membrane.

2. Un procédé selon la revendication 1, **caractérisé en ce que** la concentration en ozone au cours de l'étape de régénération de la membrane est d'au moins 150 g/Nm³, ou d'au moins 175 g/Nm³, ou d'au moins 200 g/Nm³.

3. Un procédé selon l'une des revendications 1 et 2, **caractérisé en ce que** la pression du gaz ozone injecté au cours de l'étape de régénération de l'au moins une membrane céramique (2b, 31) est choisie pour être en-dessous du point d'ébullition de la membrane céramique spécifique (2b, 31), tel que d'au moins 1,5 bar, de préférence d'au moins 1,8 bar, de façon plus préférée d'au moins 2,0 bar, et plus préférentiellement de 2,2 bar.

4. Un procédé selon l'une des revendications 1, 2 et 3, **caractérisé en ce que** l'au moins une membrane céramique (2b, 31) est une membrane céramique tubulaire (2b) ou une membrane céramique en feuille plate (31).

5. Un procédé selon l'une quelconque des revendications précédentes 1 à 4, **caractérisé en ce que** le procédé comprend une étape de capture de gaz ozone selon laquelle le gaz ozone utilisé pendant la période de régénération est capturé et recueilli pour une réutilisation dans une étape de régénération subséquente ou identique.

6. Un procédé selon l'une quelconque des revendications précédentes 1 à 5, **caractérisé en ce que** le procédé comprend l'étape consistant à distribuer à l'au moins une membrane céramique (2b, 31) à l'intérieur du logement de membrane (2a, 32) un mélange de gaz ozone recyclé et de gaz provenant d'une source de gaz ozone (6, 25) de gaz ozone frais.

7. Un procédé selon l'une quelconque des revendications précédentes 1 à 6, **caractérisé en ce que** la pression du gaz ozone déplace au moins une partie du mélange de particules liquides (L) à partir du logement de membrane (2a).

8. Un procédé selon l'une quelconque des revendications précédentes 1 à 7, **caractérisé en ce que** le procédé comprend en outre l'étape consistant à évacuer le perméat recueilli à la sortie de perméat (4a) à travers l'au moins une membrane céramique (2b, 31) après avoir soumis l'au moins une membrane céramique (2b, 31) au gaz ozone dans la direction (A4) opposée à la direction de filtration (A2), optionnellement recycler le perméat évacué vers le flux du mélange de particules liquides (L) destiné à être filtré ou séparé par l'au moins une membrane céramique (2b, 31).

9. Un procédé selon la revendication 8, **caractérisé en ce que** le perméat est évacué à travers l'au moins une membrane céramique (2b, 31) par une étape de pompage du perméat à partir d'un réservoir de circulation inverse (14) connecté à la sortie de perméat (4a).

10. Un procédé selon l'une quelconque des revendications précédentes 1 à 9, **caractérisé en ce que** le flux du mélange de particules liquides (L) est pompé ou aspiré à travers l'au moins une membrane céramique (2b, 31).

11. Un procédé selon l'une quelconque des revendications précédentes 1 à 10, **caractérisé en ce que** l'au moins une membrane céramique (2a, 31) est mise en oeuvre selon un mode à flux transversal.

12. Un dispositif de séparation de particules liquides (1, 1', 1") adapté pour au moins partiellement restaurer la capacité fonctionnelle d'au moins une membrane céramique (2b, 31), lequel dispositif de séparation de particules liquides (1, 1', 1") comprend au moins une membrane céramique (2b, 31) située dans un logement de membrane (2a, 32) présentant au moins une entrée d'alimentation (3) et une sortie de perméat (4a), une source d'alimentation (3) pour alimenter un mélange de particules liquides dans le logement de membrane (2a, 32), un moyen de perméat (4, 4a) pour recevoir un perméat filtré ou séparé depuis le logement de membrane (2a, 31), et un moyen de rétentat (5), pour recevoir les particules ou une bouillie à partir du logement de membrane (2a, 31) et un moyen (10) pour drainer ou vider le logement de membrane (2a, 31) avant ou pendant que le gaz ozone est injecté à partir d'une source de gaz ozone, **caractérisé en ce que** le dispositif de séparation de particules liquides (1, 1', 1") comprend en outre la source de gaz ozone (6, 25) connectée au logement de membrane (2a, 31), un moyen d'injection d'ozone pour injecter du gaz ozone à une concentration d'au moins 120 g/Nm³, où un mètre cube normal (Nm³) est défini comme étant un mètre cube de gaz à une température de 0 °C, et à une pression de 1,01325 bar, dans le logement de membrane (2a, 31) à travers l'au moins une membrane céramique (2b, 31) dans une direction d'injection d'ozone (A4) opposée à la direction de filtration (A2), et des moyens de recirculation du gaz ozone entre une sortie d'ozone (11) et une entrée d'ozone (2d) du logement de membrane (2a, 32) pendant une étape de régénération de la membrane.

13. Un dispositif de séparation de particules liquides (1, 1', 1") selon la revendication 12, **caractérisé en ce que** le matériau du logement de membrane et le conditionnement du logement de membrane (2a, 32), les bagues et joints d'étanchéité sont choisis parmi les matériaux résistants à une concentration d'ozone d'au moins 120 gO₃/Nm³, tels que l'acier inoxydable et les matériaux polymères résistant à l'ozone.

14. Un dispositif de séparation de particules liquides (1, 1', 1") selon la revendication 12 ou 13, **caractérisé en ce que** le nombre de membranes céramiques (2b, 31) dans le logement de membrane (2a, 32) est de 2, 3, 4, 5, 6, 7, 8, 9, 10 ou plus.

15. Un dispositif de séparation de particules liquides (1, 1', 1") selon la revendication 12, 13 ou 14, **caractérisé en ce que** la source de gaz ozone (6, 25) est un générateur d'ozone (25) configuré pour approvisionner un réservoir d'ozone sous pression (6).

16. Un dispositif de séparation de particules liquides (1, 1', 1") selon l'une quelconque des revendications précédentes 12 à 15, **caractérisé en ce que** le dispositif est configuré de sorte que le gaz ozone fourni à l'au moins une membrane céramique (2b, 31) à l'intérieur du logement de membrane (2a, 32) est un mélange de gaz ozone recyclé et d'un gaz provenant d'une source d'ozone frais.

17. Un dispositif de séparation de particules liquides (1, 1', 1") selon l'une quelconque des revendications précédentes 12 à 16, **caractérisé en ce que** la source de gaz ozone (6, 25) est en communication fluidique avec le logement de membrane (2a, 32) au niveau du moyen de perméat (4, 4a).

18. Un dispositif de séparation de particules liquides (1, 1') selon l'une quelconque des revendications précédentes 12 à 17, **caractérisé en ce que** le moyen de perméat (4, 4a) comprend un ou plusieurs éléments parmi une ligne de perméat (4) avec une vanne de perméat (16), un réservoir de circulation inverse (14) entre la vanne de perméat (16) et le logement de membrane (2a).

19. Un dispositif de séparation de particules liquides (1, 1', 1") selon l'une quelconque des revendications précédentes 12 à 18, **caractérisé en ce que** le moyen de perméat (4, 4a) comprend un ou plusieurs éléments parmi une ligne de perméat (4) avec une vanne de perméat (16), un réservoir de circulation inverse (14) entre la vanne de perméat (16) et le logement de membrane (2a), et une pompe de perméat (17b) connectée au réservoir de circulation inverse (14) pour pomper le perméat depuis le réservoir de circulation inverse (14) à travers le logement de membrane (2a) et de l'au moins une membrane céramique (2b).

20. Un dispositif de séparation de particules liquides (1, 1') selon l'une quelconque des revendications 12 à 19, **caractérisé en ce que** le moyen (10) pour drainer ou vider le logement de membrane (2a, 32) comprend une vanne de drainage ou de vidange (11) en communication fluidique avec la source d'alimentation (3).

21. Un dispositif de séparation de particules liquides (1, 1', 1") selon l'une quelconque des revendications précédentes 12 à 20, **caractérisé en ce que** le dispositif de séparation de particules liquides (1, 1', 1") comprend un débitmètre (15) pour mesurer le flux du perméat filtré ou séparé.

22. Un dispositif de séparation de particules liquides (1, 1', 1") selon l'une quelconque des revendications précédentes 12 à 21, **caractérisé en ce que** la source d'alimentation (3) comprend un manomètre de source d'alimentation (8a), le moyen de perméat (4, 4a) comprenant un manomètre de moyen de perméat (13), et le moyen d'injection d'ozone comprend un capteur de concentration.

23. Un dispositif de séparation de particules liquides (1, 1') selon l'une quelconque des revendications précédentes 12 à 22, **caractérisé en ce que** la source d'alimentation (3) comprend une première pompe (7) pour pomper le mélange de particules liquides (L) vers l'au moins une membrane céramique (2b, 31).

24. Un dispositif de séparation de particules liquides (1, 1', 1") selon la revendication 23, **caractérisé en ce que** la source d'alimentation (3) comprend une deuxième pompe (17b) pour pomper un perméat filtré ou séparé à travers l'au moins une membrane céramique (2b, 31).

25. Un dispositif de séparation de particules liquides (1, 1', 1") selon la revendication 23 ou la revendication 24, **caractérisé en ce que** la première pompe (7) de la source d'alimentation (3) est remplacée par un premier dispositif d'aspiration (33) pour aspirer le mélange de particules liquides (L) à travers la membrane (2a, 31).

26. Un dispositif de séparation de particules liquides (1, 1', 1") selon la revendication 24, **caractérisé en ce que** la deuxième pompe de la source d'alimentation (3) est remplacée par un deuxième dispositif d'aspiration pour aspirer le perméat filtré ou séparé à travers l'au moins une membrane céramique (2b).
